(19) Europäisches Patentamt
European Patent Office
Office européen des brevets

(11) Publication number: **0 132 193**
**B1**

(12) # EUROPEAN PATENT SPECIFICATION

(45) Date of publication of patent specification: **16.12.87**

(51) Int. Cl.[4]: **B 01 D 1/06**, B 01 D 1/22

(21) Application number: **84401453.0**

(22) Date of filing: **10.07.84**

(54) **Falling-film apparatus for the equicurrent evaporation of a solution.**

(30) Priority: **18.07.83 IT 2210383**

(43) Date of publication of application:
**23.01.85 Bulletin 85/04**

(45) Publication of the grant of the patent:
**16.12.87 Bulletin 87/51**

(84) Designated Contracting States:
**BE DE FR GB IT NL**

(56) References cited:
**DE-C- 69 707**
**DE-C- 861 991**
**FR-A-1 248 535**
**FR-A-2 420 362**
**FR-E- 53 112**
**GB-A- 5 020**
**GB-A-1 458 492**
**NL-A-6 804 152**

(73) Proprietor: **Montedison S.p.A.**
**31, Foro Buonaparte**
**I-20121 Milan (IT)**

(72) Inventor: **Pagani, Giorgio**
**26/6 Viale Faenza**
**Milan (IT)**

(74) Representative: **Hirsch, Marc-Roger**
**Cabinet Hirsch 34 rue de Bassano**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns a falling-film separating apparatus for stripping under high pressure residual vapors from the effluent issuing from a synthesis reactor of an urea producing plant, including a vertical tube-bundle heat exchanger which comprises, in a shell, an upper tube sheet and a lower tube sheet delimiting between them a space adapted to receive a heat exchange fluid, and liquid feeding and distributing means adapted to feed liquid onto said upper tube sheet so as to form thereupon a liquid body, while the tubes forming said tube bundle extend through said upper tube sheet and form above said upper plate upwardly protruding tube portions which are provided with flow passages through which liquid is allowed to enter said tubes in the form of a film.

Falling-film evaporation is a fairly common operation, exploited for various purposes; one example is the evaporation of essential oils, in order to separate the active components (from certain terpenic impurities) or the concentration of $(NH_4)NO_3$ solutions; another example is the distillation of urea solutions.

A process for the synthesis of urea (I.D.R. process) is described, for instance, in U.S. patent 4,208,347. Said Patent states clearly that if it is desired to reach high conversion yields for the reaction:

$$NH_2-\overset{\overset{\displaystyle O}{\|}}{C}-O-NH_4 \rightleftharpoons NH_2-\overset{\overset{\displaystyle O}{\|}}{C}-NH_2+H_2O$$

$NH_3$:$CO_2$ molar ratios much higher than 2 must be used within the reactor and therefore the $NH_3$ excess, which is present within the synthesis solution (together with the non reacted carbamate), has to be displaced, after the reaction, from the urea solution, usually by means of one or more strippers, whereto heat is supplied, optionally together with the injection of a gaseous stripping agent (coadjuvant), such as $CO_2$ or $N_2$, and in subsequent steps, frequently isobaric with the synthesis reactor.

The resulting stripped vapors are recycled as such, or condensed in the presence of suitable amounts of water, the solution thus obtained then being recycled to the reactor. After a first highpressure loop (frequently isobaric with the synthesis) there is a second, and final, low-pressure loop, the so-called "finishing" loop, where the working pressures are very low and where the purpose is to remove from the solutions, in the vapor phase and as completely as possible, $CO_2$ and $H_3$ not bound in the form of an urea molecule ($CO_2$ being present, e.g., as ammonium carbamate or carbonate). Usually said "non-bound" $NH_3$ is in strong excess with respect to the "non-bound" $CO_2$ and with respect to the stroichiometry of ammonium carbamate ($NH_3/CO_2$=0.77 b.w. namely 2:1 by moles), and the recovery of $NH_3$ (from the vapors released by the solutions) requires a huge amount of water, which water is necessarily recycled to the synthesis reactor, where an increase of the $H_2O$:$CO_2$ ratio heavily impairs the conversion yields.

It is known that said $NH_3$ excess (with respect to the carbamate stoichiometry) can be removed with much more difficulty than the $NH_3$ and the $CO_2$ chemically bound in the form of carbamate; therefore an $NH_3$:$CO_2$ ratio of 0.77 b.w., namely a 2:1 ratio by moles, would represent an optimum and desirable choice, independently from the amounts of carbamate, the removal of which carbamate being notoriously a difficult operation.

DE—C—861 991 and FR—A—1 248 535 disclose falling film evaporators which differ from the evaporator according to the invention by the fact that in the evaporator according to DE—C—861 991 the recycle pipe separates completely the vapors from the effluent and thus does not allow the presence of high pressure vapors in the free space, above the entering liquid effluent, which exert a dampening action eliminating dangerous vibrations which could impair the mechanical strength of the steel walls. Furthermore, FR—A—1 248 535 does not allow the possibility to bring the vapors into contact with the incoming liquid, which phenomenon has a considerable impact on the distribution of the concentrations of the reactants.

In other words, especially at the highest pressures (frequently coinciding with the synthesis pressure), it is desirable to suppress nearly completely said $NH_3$ excess and to keep said ratio near to the optimum level (0.77 b.w.), while committing the easy "finishing" the operation to remove the residual carbamate, whatever the amount. Such a suppression is particularly difficult when the stripping is performed without the use of gaseous stripping agents from outside; in such a case, in fact, said ratio tends to increase considerably.

One object of the invention is to locate a stripper in which said $NH_3$ excess is removed as completely as possible and in which said $NH_3$:$CO_2$ ratio is kept as near as possible to the optimum level. Other objects will be evident from the description hereinafter.

In its most general form, the invention concerns a falling-film separating apparatus of the above tape characterized in that said upwardly protruding tube portions are closed at their respective upper ends, and in that vapor canalizing means are provided for connecting the space defined inside said shell below said lower tube sheet to the space defined inside said shell above said liquid body, whereby the vapors stripped in said apparatus from the effluent treated therein are brought into contact with the effluent just entering said apparatus and in that said flow passages are constituted by tangentially directed through-holes.

Said means can suitably consist of a recycle piping (through which no liquid flows) protruding over said uppermost sheet more than the projection formed by said sleeves, said piping being free of distribution slots—in the protruding portion—for a length at least equal to the height of said sleeves, wherein said piping is supplied with at least one opening (for the outlet of the recycled vapors), said opening being at a level higher than said uppermost end of the sleeves.

Should said opening coincide with the uppermost mouth of the piping (see figures 1, 1bis, 1ter and 2), it is necessary to surmount said mouth, e.g. by means of a small sloping roof, which prevents any liquid from entering the piping; should said recycle piping be unique, its size must be properly calculated, obviously in a different way with respect to the calculation of the falling-film exchanging pipes.

Alternatively said single piping may be replaced, for instance, by an appropriate number of pipes having the same diameter of the falling-film pipes, provided obviously the projection of the sheet is sufficiently long and the position (height) of the slots is modified as already described for said unique piping.

According to a particular embodiment, the apparatus according to the invention comprises, within the space lying between said feed distributor and the top of said sleeves, a packing layer or sieve trays or any equivalent (standard) device, in order to increase the distribution homogeneity of the falling liquid and the vapor-liquid interphase contact, whereby $CO_2$ contained in said vapors is adiabatically absorbed by $NH_3$-urea-carbamate solution (in amounts as near as possible to the equilibrium level) and whereby, consequently, the heat released by $CO_2$ absorption gives rise to a further increase of $NH_3$ removal from the liquid, and final $NH_3/CO_2$ ratio, within the solution, being thus increasingly and considerably reduced. According to an alternative embodiment, the recycle piping may lie outside the stripper and the arrangement of the packing layer or of other equivalent devices may also be outside.

As a consequence of the apparatus according to the invention, the urea solutions contains less in free $NH_3$ than carbamate, which allows to obtain considerable advantages. The equicurrent run, furthermore, speeds up the displacement of $NH_3$ from the liquid (while lessening, contemporaneously, the carbamate decomposition) and offers, for example, the following advantages:

—simplification of the recycle of the non-reacted reactants ($NH_3$ and $CO_2$);

—lowering of the $H_2O/CO_2$ ratio within the synthesis reactor, thus increasing the carbamate conversion into urea.

A further advantage of the apparatus according to the invention, in the case of an urea synthesis cycle of the I.D.R. type, resides in that it allows an easier, quicker and safer re-starting of the plant, when a non-scheduled halt does occur.

Until now reference has been made to an $NH_3$ stripping in the absence of driving gas and at a pressure substantially equal to the synthesis pressure. The present apparatus, however, can be advantageously used also for displacing $NH_3$ into the vapour phase when the pressure of the start solution is much lower than said synthesis pressure and the apparatus will be most appropriately named according to the individual cases, such as, for instance, "medium-pressure still", "low-pressure still" and so on.

The apparatus according to the invention is also illustrated, as an example and in non-limitative form, by means of figure 1, according to which figure an aqueous area solution (1), having for instance the following features:

| | |
|---|---|
| $NH_3$=35.80% b.w. | Urea=34.50% b.w. |
| $CO_2$=10.84% b.w. | T=194°C |
| $H_2O$=18.77% b.w. | P=195 kg/cm$^2$ (absolute) |

falls, by means of a spray nozzle (2), onto the uppermost tube sheet (3) of a falling-film heat exchanger, heated by saturated steam (4) (at 25 kg/cm$^2$, absolute), said steam being removed as condensate (5). The liquid forms a shallow heel and flows through the tangential distribution holes (6) in the side wall of the sleeves (7), projecting from of said sheet (see details in figures 1/bis and 1/ter), said sleeves being closed, at their uppermost end, by a blind disk (8).

A liquid film is thus formed on the inner wall of the pipes (9), which film flows downwards in equicurrent to the gases (prevailingly $NH_3$, $CO_2$, $H_2O$) released during the fall. At the lowermost outlet of said pipes (9) the phases are sharply separated; the liquid forms a heel on the (tapered) stripper bottom and leaves the stripper through nozzle (10), while the vapours are recycled upwards by a central piping (11) surmounted by a chimney canopy (12) and definitively leave the stripper through nozzle (13).

The central piping (11), as already stated, can obviously be replaced by a suitable number of pipes (14) of the tube-bundle, having a cumulative cross section equivalent to the cross section of piping (11), said pipes (14) being supplied with longer sleeves and being open at the top and without holes for distributing the liquid (see figure 2), up to a height at least equal to the height of said sleeves.

**Claims**

1. A falling-film separating apparatus for stripping under high pressure residual vapours from the effluent issuing from a synthesis reactor of an urea producing plant, the apparatus including a vertical tube-bundle heat exchanger which comprises, in a shell, an upper tube sheet (3) and a lower tube sheet delimiting between them a space adapted to receive a heat exchange fluid, and liquid effluent feeding (1) and distributing means (2) adapted to feed liquid effluent onto said upper tube sheet (3) so as to form thereupon a liquid body, while the tubes (9) forming said tube-bundle extend through said upper tube sheet (3) and form above said upper plate (3) upwardly protruding tube portions (7) which are

provided with flow passages (6) through which liquid effluent is allowed to enter said tubes (9) in the form of a film, characterized in that said upwardly protruding tube portions (7) are closed (8) at their respective upper ends, and in that vapour canalizing means (11) are provided for connecting the space defined inside said shell below said lower tube sheet to the space defined inside said shell above said liquid body, whereby the vapors stripped in said apparatus from the effluent treated therein are brought into contact with the effluent just entering said apparatus and in that said flow passages (6) are constituted by tangentially directed through-holes.

2. An apparatus according to claim 1, characterized in that said vapor canalizing means are constituted by a plurality of pipes (14).

3. An apparatus according to claim 1, characterized in that it further comprises a roof-shaped, tapering canopy-like element (12) disposed above said vapor canalizing means.

**Patentansprüche**

1. Fallfilm-Trennvorrichtung zum Hochdruckabziehen von Restdämpfen aus dem aus einem Synthesereaktor einer Harnstoff-Herstellungsanlage ausfliessenden Strom, wobei die Vorrichtung einen Vertikal-Röhrenbündel-Wärmeaustauscher umfasst, der innerhalb eines Gehäuses eine obere Rohrplatte (3) und eine untere Rohrplatte aufweist, welche Rohrplatten einen zwischen ihnen befindlichen Raum begrenzen, in den ein Wärmeaustauschmedium einlassbar ist, ferner Ausströmflüssigkeits-Zuleitungsmittel (1) und Ausströmflüssigkeits-Verteilermittel (2), um die Ausströmflüssigkeit auf die obere Rohrplatte (3) zu leiten, derart dass oberhalb derselben ein Flüssigkeitskörper gebildet wird, während die das Röhrenbündel bildenden Rohre (9) die obere Rohrplatte (3) durchdringen und oberhalb dieser Platte (3) nach oben überstehend Rohrabschnitte (7) bilden, die mit Durchlässen (6) versehen sind, durch welche die Ausströmflüssigkeit in Form eines Films in diese Rohr (9) eintreten kann, dadurch gekennzeichnet, dass die nach oben überstehenden Rohrabschnitte (7) an ihren jeweiligen oberen Enden geschlossen (8) sind, und dass Dampfleitmittel (11) vorgesehen sind, die den innerhalb des Gehäuses unterhalb der unteren Rohrplatte gebildeten Raum mit dem innerhalb des Gehäuses oberhalb des Flüssigkeitskörpers gebildeten Raum verbinden, derart, dass die in der Vorrichtung aus der in derselben behandelten Ausströmflüssigkeit abgezogenen Dämpfe mit der in die Vorrichtung eintretenden Ausströmflüssigkeit in Berührung gebracht werden, wobei die Durchlässe (6) durch tangential angeordnete Durchlassbohrungen gebildet sind.

2. Vorrichtung nach Anspruch 1, dadurch gekennzeichnet, dass die Dampfleitmittel durch mehrere Rohre (14) gebildet sind.

3. Vorrichtung nach Anspruch 1, dadurch gekennzeichnet, dass sie ferner ein dachförmiges, baldachinartiges und sich verjüngendes Abschirmungselement aufweist, das oberhalb der Dampfleitmittel angeordnet ist.

**Revendications**

1. Dispositif séparateur à lame descendante pour extraire sous haute pression des vapeurs résiduelles à partir d'un effluent évacué d'un réacteur de synthèse d'une installation de production d'urée, comportant un échangeur de chaleur à faisceau de tubes vertical qui comprend, dans une enveloppe, une plaque à tubes supérieure (3) et une plaque à tubes inférieure qui délimitent entre elles une enceinte appelée à recevoir un fluide d'échange thermique, et des moyens d'amenée (1) et de distribution (2) d'effluent liquide susceptibles d'amener du liquide effluent au-dessus de ladite plaque à tubes supérieure (3) de manière à former au-dessus de cette plaque une masse de liquide, cependant que les tubes (9) formant ledit faisceau de tubes traversent ladite plaque à tubes supérieure (3) et forment au-dessus de ladite plaque supérieure (3) des tronçons de tube (7) dépassant vers le haut qui sont pourvus de passages (6) à travers lesquels le liquide effluent peut s'écouler pour pénétrer sous la forme d'une lame ou pellicule dans lesdits tubes (9), caractérisé en ce que lesdits tronçons de tube (7) dépassant vers le haut sont fermés (8) à leurs extrémités supérieures respectives; en ce que des moyens canalisant (11) la vapeur et reliant l'enceinte définie, à l'intérieur de ladite enveloppe et au-dessous de ladite plaque à tubes inférieures, à l'enceinte définie à l'intérieur de ladite enveloppe et au-dessus de ladite masse de liquide, de sorte que les vapeurs extraites dans ledit dispositif à partir de l'effluent qui y est traité, sont mises en contact avec l'effluent qui pénètre dans ledit dispositif; et en ce que lesdits passages (6) sont constitués par des perçages orientés tangentiellement.

2. Dispositif selon la revendication 1, caractérisé en ce que lesdits moyens de canalisation de vapeur sont constitués par une pluralité de tubes (14).

3. Dispositif selon la revendication 1, caractérisé en ce qu'il comporte, en outre, un élément pentu du type chapeau chinois (12) disposé au-dessus desdits moyens canalisant la vapeur.

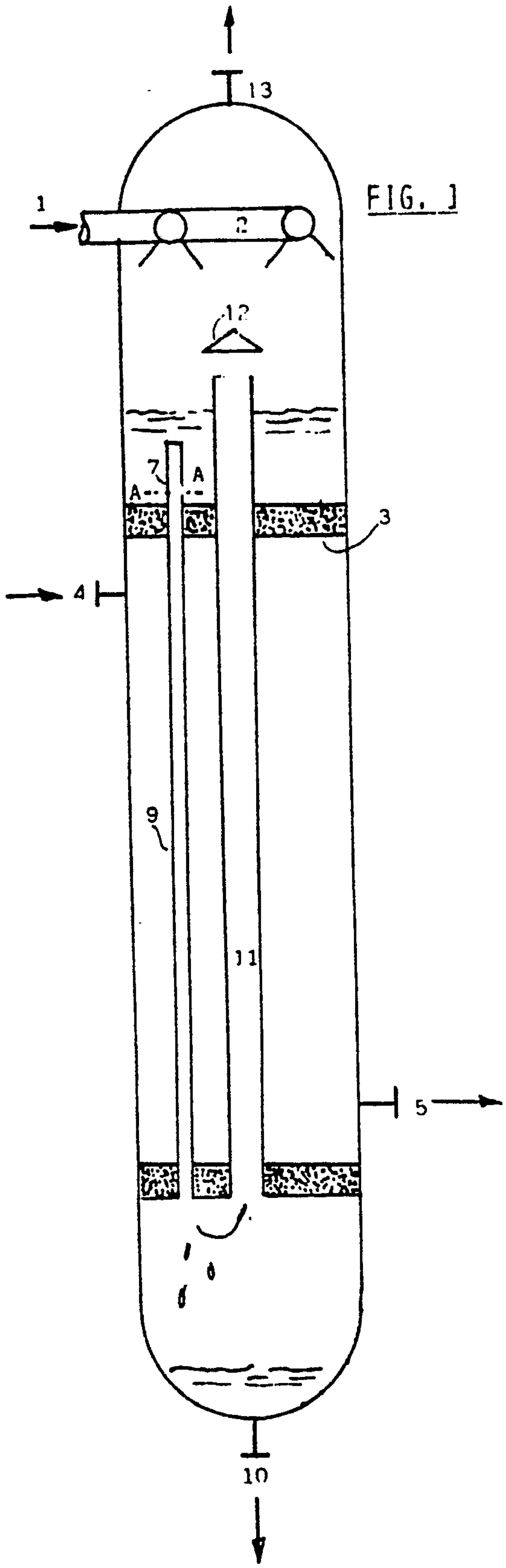


FIG. 1

FIG. 1 BIS

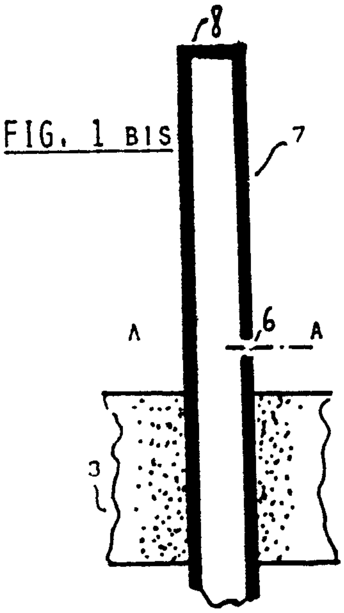


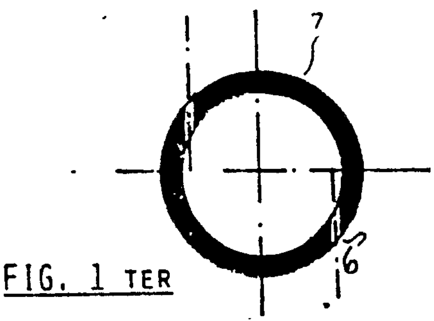


FIG. 1 TER

A - A

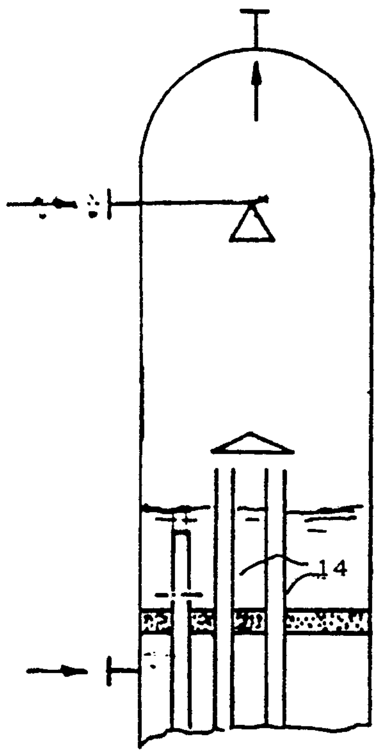


FIG. 2